# EUROPÄISCHE PATENTSCHRIFT

(11) **EP 1 107 388 B1**
(45) Veröffentlichungstag und Bekanntmachung des Hinweises auf die Patenterteilung: **29.03.2006**
(21) Anmeldenummer: 00125642.9
(22) Anmeldetag: 23.11.2000
(51) Int. Cl.: H01R 13/703

(54) **Steckverbinder**
Plug-in connector
Connecteur enfichable

(30) Priorität: 02.12.1999 DE 19958161
(43) Veröffentlichungstag der Anmeldung: 13.06.2001
(73) Patentinhaber: ROBERT BOSCH GMBH, 70442 Stuttgart (DE); Conti Temic microelectronic GmbH, 90411 Nürnberg (DE)
(72) Erfinder: Bloecher, Eberhard, 71665 Vaihingen (DE); Nitschke, Werner, 71254 Ditzingen (DE); Karl, Otto, 71229 Leonberg (DE); Nitzsche,Thomas, 74321 Bietigheim (DE); Huber, Thomas, 71717 Beilstein (DE); Meyer, Michael, 71155 Altdorf (DE); Bischoff, Michael, 63768 Rottenberg (DE); Block, Wolfgang, 84478 Waldkraiburg (DE); Rinkens, Johannes, 85055 Ingolstadt (DE); Schink, Frank, 72415 Grosselfingen (DE)

(56) Entgegenhaltungen:
- EP-A- 0 852 413
- GB-A- 2 245 775

## Beschreibung

Die Erfindung betrifft einen Steckverbinder mit einem Stecker, der mit einer Vorrichtung elektrisch leitend verbundene Steckerkontakte aufweist, und einer Buchse mit zu den Steckerkontakten passenden Buchsenkontakten, wobei zwischen den jeweils einer Vorrichtung zugeordneten Steckerkontakten ein mechanischer Kontakt angeordnet ist, der im zusammengesteckten Zustand des Steckverbinders durch eine in der Buchse angeordnete Zunge unterbrochen und bei abgezogenem Stecker kurzgeschlossen ist.

In der Automobiltechnik werden beispielsweise dreireihige und 84-polige Steckverbinder eingesetzt. Jeder Steckverbinder weist eine an einem Steuergerät befestigte Buchse und einen zu der Buchse passenden Stecker auf. In dem Steuergerät sind bei einer Ausführungsform die Steuerelektronik für Airbags und die dazu gehörenden Endstufen angeordnet und der Stecker ist über elektrische Leitungen mit Vorrichtungen, Aktuatoren oder Zündpillen für die Airbags verbunden. Um bei vom Airbag-Steuergerät abgezogenem Stecker die Vorrichtungen, Aktuatoren oder Zündpillen vor elektromagnetischen Feldern zu schützen, werden die jeweils einem Airbag zugeordneten Steckerkontakte des Steckverbinders durch mechanische Kontakte kurzgeschlossen. Infolgedessen kann es bei abgezogenem Stecker nicht zu einem unbeabsichtigten Zünden der Airbags aufgrund einer Beeinflussung der Elektronik durch elektromagnetische Felder kommen. An der Buchse des Steckverbinders sind sogenannte Zungen vorgesehen, die bei zusammengestecktem Steckverbinder die mechanischen Kontakte unterbrechen bzw. öffnen.

Bei den bekannten Steckverbindern unterbricht eine Zunge der Buchse jeweils zwei mechanische Kontakte, die jeweils zu einem Airbag-Stromkreis bzw. Airbag-Zündkreis gehören. Da die Zungen als senkrechte Kunststoffstege ausgeführt sind, die jeweils zwei Buchsenkontakte ersetzen, verringert sich mit jeder Zunge auch die Anzahl der für eine separate Signalübertragung nutzbaren Steckerkontakte des Steckverbinders. Da bei modernen Fahrzeugen eine Vielzahl von Airbags, wie Sidebags, Windowbags oder Kniebags vorgesehen sind, ist einerseits eine hohe Anzahl von mechanischen Kontakten erforderlich und andererseits soll über die Steckverbinder eine möglichst hohe Anzahl separater elektrisch leitender Verbindungen hergestell werden.

EP-A-0852413 beschreibt einen Steckverbinder gemäß dem Oberbegriff des Anspruchs 1.

Es ist Aufgabe der vorliegenden Erfindung, einen Steckverbinder der eingangs genannten Art derart weiterzubilden, daß bei gleicher Steckergeometrie die Anzahl der nutzbaren Steckerpins erhöht werden kann, wobei der Kurzschlußschutz für die mit den Steckerkontakten verbundenen Vorrichtungen, bspw. Zündpillen, ebenfalls vorhanden ist.

Die Aufgabe wird durch die Merkmale des unabhängigen Patentanspruchs 1 gelöst. Danach unterbricht jedes Mittel, bspw. eine Zunge, bei zusammengesteckten Steckverbinder gleichzeitig mehrere mechanische Kontakte, die zwischen den Steckerkontakten von unterschiedlichen Vorrichtungen, bspw. Zündpillen, angeordnet sind.

Erfindungsgemäß ist erkannt worden, daß die Anzahl der nutzbaren Steckerpins bei gleicher Steckergeometrie erhöht werden kann, wenn jede Zunge beim Zusammenstecken des Steckverbinders gleich mehrere mechanische Kontakte verschiedener Airbag-Zündkreise, bestehend aus Endstufe, Kabelbaum und Zündpille, unterbricht. Gerade wenn als Zunge ein innerhalb der Buchse angeordneter, senkrecht stehender Kunststoffsteg vorgesehen ist, der an Stelle eines oder mehrerer Buchsenkontakte angeordnet ist, können dadurch zusätzlich separat nutzbare Buchsenkontakte entstehen. Jeder mechanische Kontakt ist in der Art eines durch die Zungen betätigbaren Schalters ausgeführt.

Gemäß der vorliegenden Erfindung kann eine Zunge gleichzeitig mehrere mechanische Kontakte verschiedener Vorrichtungen, bspw. Airbag-Zündkreise, unterbrechen.

Dies kann bei verschiedenen Buchsengeometrien dadurch erreicht werden, daß eine Zunge innerhalb einer ersten Reihe von Buchsenkontakten um eine Position seitlich versetzt zu zwei Buchsenkontakten einer benachbarten Reihe angeordnet ist. Dadurch kann der um eine Kontaktposition überstehende Teil der Zunge dazu eingesetzt werden, den mechanischen Kontakt einer weiteren Vorrichtung, bspw. eines Airbag-Zündkreises, zu unterbrechen. Aufgrund dieser Maßnahme wird mit einer Zunge nicht lediglich der mechanische Kontakt einer Vorrichtung geöffnet, sondern eine Zunge öffnet die verschiedenen Vorrichtungen zugeordneten mechanischen Kontakte. Durch die Anzahl der dadurch frei werdenden Buchsen- und Steckerkontakte kann der Funktionsumfang zukünftiger Airbag-Steuergerät verbessert werden. Die Steckerbelegung, d. h. im Beispiel der dreireihige Stecker mit 84 Polen, kann wie bisher eingesetzt werden, wobei die über den Steckverbinder übertragene Verbindungsdichte erhöht ist. Dennoch bleibt der Kurzschfußschutz der Airbag-Zündkreise bei gezogenem Stecker ebenfalls vorhanden.

Die Steckerkontakte des Steckers und/oder die Buchsenkontakte der Buchse sind mehrreihig angeordnet. Jeweils zwei mit einer Vorrichtung direkt verbundene Stekkerkontakte sind im Stecker in einer Reihe benachbart angeordnet. Da die mit einer Vorrichtung, beispielsweise den Airbag-Zündpillen, elektrisch leitend verbundenen Steckerkontakte nebeneinander angeordnet sind, lassen sich auf einfache Weise ein oder mehrere mechanische Kontakte zwischen den beiden Steckerkontakten anordnen. In einer weiteren benachbarten Reihe ist jeweils eine Ausnehmung im Stecker vorgesehen, in die die Zunge der Buchse eingreifen kann, um den mechanischen Kontakt im Stecker durch eine in oder hinter der Ausnehmung vorgesehene Mechanik zu unterbrechen. Beim zusammengesteckten Steckverbinder sind die mechanischen Kontakte unterbrochen. Bei abgezogenem Stecker sind die mechanischen Kontakte geschlossen, so daß elektromagnetische Felder die Vorrichtung nicht beeinflussen können.

Bei einer besonders bevorzugten Weiterbildung der Erfindung ist im Stromkreis des Steckers zwischen den jeweils zwei mit einer Vorrichtung elektrisch leitend verbundenen Steckerkontakten ein mechanischer Kontakt und ein weiterer Steckerkontakt vorgesehen. Der weitere Steckerkontakt ist bevorzugt in einer benachbarten Reihe zu den mit der Vorrichtung direkt elektrisch leitend verbundenen Steckerkontakten vorgesehen. Der weitere Steckerkontakt kann einerseits Bestandteil der Mechanik sein, die die mechanischen Kontakte öffnet, oder anderseits mit einem weiteren elektrischen Leiter zur Signalübertragung verbunden sein.

Im Stecker ist bevorzugt zwischen dem weiteren Steckerkontakt und den mit jeweils einer Vorrichtung direkt verbundenen Steckerkontakten einerseits der mechanische Kontakt und anderseits eine fest verdrahtete leitende Verbindung vorgesehen. Infolgedessen ist pro Stromkreis bzw pro Zündkreis, der aus einer Vorrichtung und den zugeordneten Steckerkontakten gebildet ist, lediglich ein mechanischer Kontakt vorgesehen. Pro Vorrichtung sind im Stecker zwei Steckerkontakte in einer Reihe und ein weiterer Steckerkontakt in einer benachbarten Reihe vorgesehen, wobei zwischen einem ersten direkt mit der Vorrichtung verbundenen Steckerkontakt und dem weiteren Steckerkontakt eine fest verdrahtete Verbindung vorgesehen ist und der mechanische Kontakt zwischen dem weiteren Steckerkontakt und dem zweiten direkt mit der Vorrichtung verbundenen Steckerkontakt angeordnet ist. Neben dem weiteren Steckerkontakt ist in dessen Reihe eine Ausnehmung vorgesehen, in die die Zunge der Buchse eingreift, um die Mechanik zum Unterbrechen des mechanischen Kontakts zu betätigen. Die Mechanik kann beispielsweise durch einen Federkontakt gebildet sein, der durch die Zunge verbogen wird, um beim Zusammenstecken den mechanischen Kontakt zu öffnen. Andererseits können zwei zueinander vorgespannte leitende Elemente den mechanischen Kontakt bilden, die durch eine Kunststoffzunge trennbar sind.

Bevorzugt ist die Zunge in der Buchse jeweils an der Stelle von zwei Buchsenkontakten angeordnet. Erfindungsgemäß ist die Zunge dabei in einer zu den direkt mit der Vorrichtungen verbundenen Steckerkontakten benachbarten Reihe in der Buchse vorgesehen, jedoch jeweils eine Kontaktposition zur Seite versetzt, so daß gleichzeitig zwei mechanische Kontakte separater Vorrichtungen unterbrochen werden können. Die Zungen in der Buchse und die entsprechenden Ausnehmungen im Stecker sind in ihrer Position aufeinander angepaßt, so daß der Steckverbinder zusammensteckbar ist und die mechanischen Kontakte beim Zusammenstecken gleichzeitig unterbrochen werden.

Die Zungen in der Buchse sind bevorzugt senkrecht stehende Kunststoffstege. Natürlich können auch andere Ausgestaltungen der Zungen vorgesehen sein. Es muß lediglich deren Funktion gewährleistet sein, nämlich die mechanischen Kontakte beim Zusammenstecken zu unterbrechen.

Bei einer Weiterbildung der Erfindung weist die Buchse in einer Reihe abwechseind zwei Buchsenkontakte und eine Zunge auf. Die Zunge ersetzt dabei im Raster der Kontakte jeweils zwei Buchsenkontakte. Bei dieser Ausgestaltung werden pro Zunge zwei nutzbare Buchsenkontakte gewonnen. Es ist natürlich auch denkbar, die Zungen derart auszugestalten, daß gleichzeitig mit einer Zunge drei oder mehr mechanische Kontakte verschiedener Vorrichtungen, d.h. Airbag-Zündkreise, unterbrochen werden. Dabei wird zumindest ein weiterer nutzbarer Buchsenkontakt gewonnen. Schließlich könnte die Zunge im Raster der Kontakte nur einen Buchsenkontakt ersetzen, dabei aber über eine Mechanik dennoch mehrere mechanische Kontakte verschiedener Vorrichtungen unterbrechen.

Die Buchse kann in einer zu den Zungen benachbarten Reihe die zu den direkt mit einer Vorrichtung elektrisch leitend verbundenen Steckerkontakten passende Buchsenkontakte aufweisen. Eine herkömmliche Buchse kann daher auf einfache Weise mit den Zungen ausgestattet werden, um mit dem erfindungsgemäßen Stecker zusammenzupassen. Die Steckerbelegung kann dann aus Kompatibilitätsgründen wie bisher, beispielsweise dreireihig und 84-polig, bestehen bleiben. Die zu den Steckerkontakten passenden Buchsenkontakte können direkt mit einer Endstufe zur Ansteuerung von Aktuatoren verbunden sein. Als Aktuatoren können neben Airbags für Kraftfahrzeuge auch sämtliche andere in der Automobiltechnik einsetzbare Vorrichtungen Verwendung finden.

Im Stecker sind wie bereits erwähnt Ausnehmung vorgesehen, in die die Zungen der Buchse im zusammensteckten Zustand eingreifen. Die Ausnehmungen sind in einer benachbarten Reihe zu den direkt mit der Vorrichtung, bspw. den Zündpillen, verbundenen Steckerkontakten angeordnet. Die Zungen können beim Zusammenstekken in eine hinter den Ausnehmungen angeordnete Mechanik im Stecker eingreifen, die die entsprechenden mechanischen Kontakte öffnet.

Der am Steuergerät befestigte Teil des Steckverbinders wird im Zusammenhang mit der vorliegenden Beschreibung als Buchse bezeichnet. Bei der technischen Ausführung können die Buchsenkontakte als Pins bzw. Kontaktstifte ausgeführt werden. Als Stecker wird der auf diese Buchse aufsteckbare Teil des Steckverbinders bezeichnet, der bei der technischen Ausführungen hülsenartige Steckerkontakte aufweist, die mit den Buchsenkontakten zusammenpassen.

Bei einer Ausführungsform wird der erfindungsgemäße Steckverbinder eingesetzt, um einen mit mehreren Zündpillen für Airbags verbundenen Stecker mit einer Buchse zu kombinieren, die mit der entsprechenden Steuerelektronik oder den Endstufen für diese Airbags elektrisch leitend verbunden ist. Wenn der Stecker mit der Buchse zusammengesteckt ist, sind dadurch die Zündpillen mit den entsprechenden Endstufen oder der Steuerelektronik elektrisch leitend verbunden. Bei abgezogenem Stecker hingegen sind die Zündpillen bzw. Aktuatoren kurzgeschlossen, wodurch ein unbeabsichtigtes Auslösen bzw. Zünden der Aktuatoren bzw. Rückhaltemittel verhindert wird.

Statt der Unterbrechung der mechanischen Kontakte beim Zusammenstecken des Steckverbinders, können die mechanischen Kontakte auch erst dann unterbrochen werden, wenn ein Verriegelungshebel an der Buchse oder an dem Stecker umgelegt wird. Eine durch diesen Verriegelungshebel betätigte Mechanik kann dann die mechanischen Kontakte über die Zungen unterbrechen. Andererseits könnte eine Mechanik die mechanischen Kontakte auch ohne Zwischenschaltung der Zungen öffnen und schließen. Dabei könnte die Hebelwirkung des Verriegelungshebels am Stecker verwendet werden.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung der Ausführungsformen zu verweisen. In der Zeichnung ist zunächst ein Steckverbinder nach dem Stand der Technik beschrieben. Die folgenden Figuren stellen lediglich beispielhaft eine Ausführungsform des erfindungsgemäßen Steckverbinders dar. Es zeigen, jeweils in schematischer Darstellung,
- Fig. 1: eine Ansicht einer Buchse nach dem Stand der Technik mit mehreren Buchsenkontakten und Zungen,
- Fig. 2: ein Schaltplan zur inneren Beschaltung des zu Fig. 1 passenden Stekkers (beispielhaft),
- Fig. 3: ein Schaltplan zur inneren Beschaltung des Steckers des erfindungsgemäßen Steckverbinders (beispielhaft),
- Fig. 4: eine Ansicht einer Buchse gemäß der vorliegenden Erfindung mit mehreren Buchsenkontakten und dazwischen angeordneten Zungen und
- Fig. 5: eine Ansicht eines Steckers gemäß der vorliegenden Erfindung mit zu der Buchse in Fig. 4 passenden Steckerkontakten und zu den Zungen passenden Ausnehmungen.

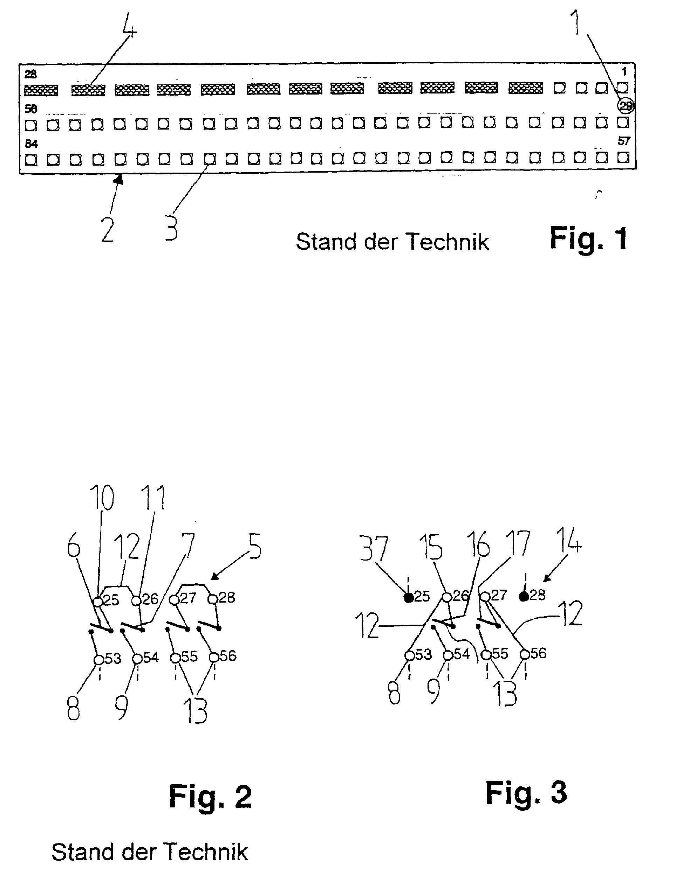

In Fig. 1 und Fig. 2 ist ein Steckverbinder nach dem Stand der Technik dargestellt. Der Steckverbinder weist eine Buchse 2 mit sechzig durch Kontaktbelegungsnummern 1 bezeichneten Buchsenkontakten 3 auf. Die Buchsenkontakte 3 sind in drei benachbarten Reihen angeordnet. In der ersten Reihe der Buchse 2 sind die Buchsenkontakte 3 mit den Kontaktbelegungsnummern 1 bis 4, in der zweiten Reihe sind die Buchsenkontakte 3 mit den Kontaktbelegungsnummern 29 bis 56 und in der dritten Reihe sind die Buchsenkontakte 3 mit den Kontaktbelegungsnummern 57 bis 84 angeordnet. Anstelle der Buchsenkontakte 3 mit den Kontaktbelegungsnummern 5 bis 28 sind zwölf Zungen 4 angeordnet, wobei jede den Raum von zwei Buchsenkontakten einnimmt. Jede Zunge 4 greift beim Zusammenstecken von Stecker 5 mit der Buchse 2 in Ausnehmungen des Steckers 5 ein. In oder hinter jeder Ausnehmung ist eine Mechanik vorgesehen, die im zusammengesteckten Zustand des Steckverbinders jeweils einen oder mehrere mechanische Kontakte 6 im Stecker 5 unterbricht. Jede der zwölf Zungen betätigt dabei ausschließlich zwei mechanische Kontakte 6 und 7, die zu einer Vorrichtung bzw. einem Zündkreis mit Zündpille gehören.

Ein Zündkreis besteht dabei mindestens aus zwei Steckerkontakten 8 und 9, die über einen Kabelbaum direkt mit einer Vorrichtung, bspw. einem Aktuator oder einer Zündpille, verbunden sind, was durch die gestrichelten Linien bei den Steckerkontakten 8 und 9 dargestellt ist. Im Beispiel nach Fig. 2 besitzt der Steckerkontakt 8 die Kontaktbelegungsnummer 53 und der Steckerkontakt 9 die Kontaktbelegungsnummer 54 des Steckers 5 nach dem Stand Technik. Zwei weitere Steckerkontakte 10 und 11, im Beispiel mit den Kontaktbelegungsnummern 25 und 26, sind miteinander über einen Leiter oder eine Kurzschlußbrücke 12 elektrisch leitend verbunden. Zwischen dem Steckerkontakt 10 und dem Steckerkontakt 8 sowie zwischen dem Stekkerkontakt 11 und dem Steckerkontakt 9 sind jeweils ein mechanischer Kontakt 6 bzw. 7 angeordnet. Die mechanischen Kontakte 6 und 7 werden beim Zusammenstecken von Stecker 5 und Buchse 2 unterbrochen und zwar durch die in der Buchse 2 bei den Kontaktbelegungsnummern 25 und 26 angeordnete Zunge 4. Dazu ist die entsprechende Zunge 4 der Buchse 2 in eine dazu passende Ausnehmung im Stecker 5 einführbar und unterbricht den darin oder dahinter angeordneten mechanischen Kontakt 6 bzw. 7. Beim Stand der Technik unterbricht also eine in der ersten Reihe der Buchse 2 angeordnete Zunge 4 beim Zusammenstecken des Steckverbinders zwei mechanische Kontakte 6 und 7, die zwischen zwei Steckerkontakten 10 und 11 in der ersten Reihe und zwei Steckerkontakten 8 und 9 in der zweiten, also der benachbarten Reihe des Steckers 5 angeordnet sind. Eine Zunge 4 der Buchse 2 nach dem Stand der Technik unterbricht also die mechanischen Kontakte 6, 7, die zu der gleichen Vorrichtung oder dem gleichen Zündkreis gehören. Zwei weitere benachbarte Steckerkontakte 13 sind mit einer weiteren separaten Vorrichtung elektrisch leitend verbunden und sind bei abgezogenem Stecker über weitere mechanische Kontakte miteinander kurzgeschlossen und bei zusammengestecktem Steckverbinder von einer anderen Zunge unterbrochen.

In Fig. 3 ist ein Schaltbild des Steckers 14 gemäß der vorliegenden Erfindung dargestellt. Die Beschaltung des Steckers 14 ist dabei gegenüber der des Steckers 5 verändert. Zwischen den direkt mit der Vorrichtung, beispielsweise einem Aktuator oder Zündpillen eines Airbags, verbundenen Steckerkontakten 8 und 9 ist nun ein weiterer Steckerkontakte 15 angeordnet, der einerseits durch eine Kurzschlußbrücke oder einen elektrischen Leiter 12 mit dem Steckerkontakt 8 elektrisch leitend verbunden ist und andererseits mit dem Steckerkontakt 9 über einen mechanischen Kontakt 16 verbunden ist. Aufgrund der Beschaltung des Steckers 14 bleiben die Steckerkontakte mit den Kontaktbelegungsnummern 25 bzw. 28 frei und können für die Übertragung weiterer elektrischer Signale verwendet werden. Sowohl der mechanische Kontakt 16 als auch der mechanische Kontakt 17 werden erfindungsgemäß durch dieselbe Zunge 19 der Buchse 18 betätigt. Im Gegensatz zum Stand der Technik betätigt bei der vorliegenden Erfindung eine Zunge 19 bis 24 der Buchse 18 gleichzeitig zwei mechanische Kontakte 16 und 17 benachbarter Vorrichtungen, Aktuatoren oder Zündkreise. Dadurch lassen sich mechanische Zungen 19 bis 24 der Buchse 18 einsparen. Eine Zunge 19, 20, 21, 22, 23 oder 24 könnte beim Zusammenstecken des Steckverbinders auch gleichzeitig mehr als zwei Zündkreise unterbrechen.

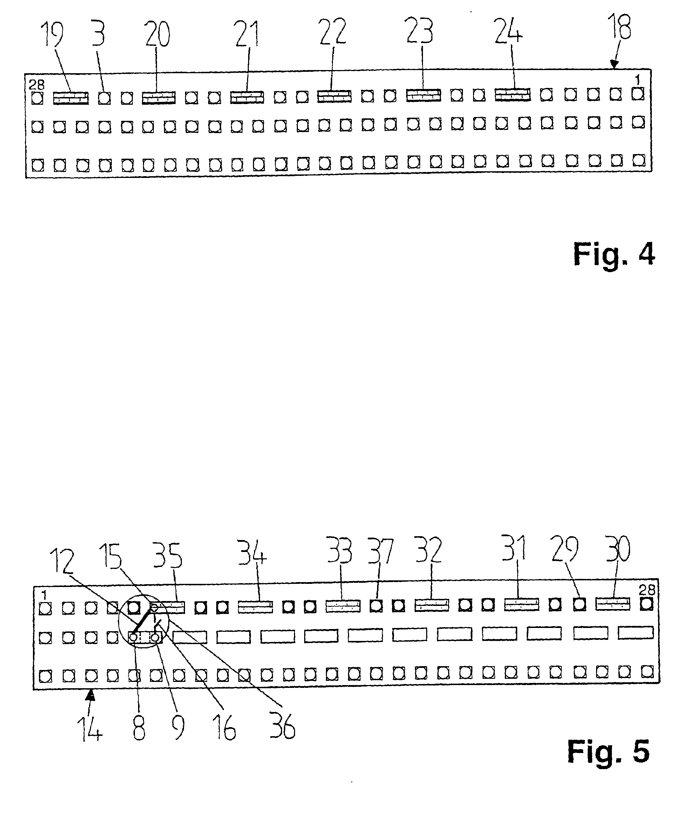

In Fig. 4 ist die Buchse 18 gemäß der vorliegenden Erfindung dargestellt. Um nun auch die Buchsenkontakte 3 mit den Kontaktbelegungsnummern 25 und 28 für die Übertragung weiterer elektrischer Signale verwenden zu können, sind die Zungen 19 bis 24 gegenüber dem Stand der Technik seitlich versetzt angeordnet, so daß beispielsweise die Zunge 19, die bei den Kontaktbelegungsnummern 26 und 27 angeordnet ist, den mechanischen Kontakt 16 des ersten Zündkreises und gleichzeitig den mechanischen Kontakt 17 des zweiten Zündkreises unterbricht. Aufgrund der erfindungsgemäßen Beschaltung der Buchse 18 wird pro Vorrichtung bzw. Zündkreis mindestens ein freier Steckerkontakt 29 zur Übertragung weiterer elektrischer Signale gewonnen, da jede Zunge 19 bis 24 gleichzeitig mechanische Kontakte 16, 17 mehrerer separate Zündkreise unterbricht.

In Fig. 5 ist schließlich noch der Aufbau des entsprechenden Steckers 14 dargestellt, wobei dieser Ausnehmungen 30 bis 35 aufweist, in die die Zungen 19 bis 24 im zusammengesteckten Zustand des Steckverbinders eingreifen. Mit 36 sind die Steckerkontakte 8, 9 und 15 sowie der Teil der Ausnehmung 35 bezeichnet, die jeweils einer Vorrichtung bzw. einem Zündkreis zugeordnet sind. Mit den Steckerkontakten 8 und 9 in der zweiten Reihe ist im Beispiel eine Zündpille verbunden, wobei im Auslösefall der Steckerkontakt 8 mit einem ersten Leiter und der Steckerkontakt 9 mit einem zweiten Leiter der Zündpille verbunden ist. Beim Eingreifen der Zunge 19 in die Ausnehmung 30 wird der entsprechende mechanische Kontakt 16 unterbrochen. Der bei der erfindungsgemäßen Beschaltung im Stecker 14 frei werdende Steckerkontakt 29, 37 kann zur Übertragung eines separaten Spannungssignals verwendet werden. Infolgedessen gewinnt man bei der erfindungsgemäßen Beschaltung des Steckverbinders pro Zündkreis mindestens einen freien Steckerkontakt, der zur Übertragung weiterer Signale über den Steckverbinder verwendet werden kann.

## Patentansprüche

1. Steckverbinder mit einem Stecker (14), der mit einer Vorrichtung elektrisch leitend verbundene Steckerkontakte (8, 9, 13) aufweist, und einer Buchse (18) mit zu den Steckerkontakten (8, 9, 13) passenden Buchsenkontakten (3), wobei zwischen den jeweils einer Vorrichtung zugeordneten Steckerkontakten (8, 9, 13 und 15) ein mechanischer Kontakt (16, 17) angeordnet ist, der im zusammengesteckten Zustand des Steckverbinders durch ein Mittel unterbrochen und bei abgezogenem Stecker (14) kurzgeschlossen ist,
**dadurch gekennzeichnet, daß** jedes Mittel (19 bis 24) bei zusammengestecktem Steckverbinder gleichzeitig mehrere mechanische Kontakte (16, 17) unterbricht, die zwischen den Steckerkontakten (8, 9, 13 und 15) von unterschiedlichen Vorrichtungen angeordnet sind.

2. Steckverbinder nach Anspruch 1, **dadurch gekennzeichnet, daß** das Mittel mindestens eine in der Buchse (18) angeordnete Zunge (19 bis 24) aufweist.

3. Steckverbinder nach Anspruch 1 oder 2, **dadurch gekennzeichnet, daß** im Stecker (14) jeweils zwei mit einer Vorrichtung verbundene Steckerkontakte (8, 9, 13) in einer Reihe benachbart angeordnet sind.

4. Steckverbinder nach einem der Ansprüche 1 bis 3, **dadurch gekennzeichnet, daß** in bzw. entgegen der Stromflußrichtung zwischen jeweils zwei mit einer Vorrichtung elektrisch leitend verbundenen Steckerkontakten (8, 9 bzw. 13) ein mechanischer Kontakt (16) und ein weiterer Steckerkontakt (15) vorgesehen ist.

5. Steckverbinder nach Anspruch 4, **dadurch gekennzeichnet, daß** der weitere Steckerkontakt (95) in einer zu den beiden mit der Vorrichtung direkt verbundenen Steckerkontakten (8, 9 bzw. 13) benachbarten Reihe angeordnet ist.

6. Steckverbinder nach einem der Ansprüche 4 oder 5, **dadurch gekennzeichnet, daß** im Stecker (14) zwischen dem weiteren Steckerkontakt (15) und den mit jeweils einer Vorrichtung direkt verbundenen Steckerkontakten (8, 9, 13) einerseits der mechanischen Kontakt (16 bzw. 17) und andererseits eine fest verdrahtete leitende Verbindung (12) bzw. Kurzschlußbrücke vorgesehen ist.

7. Steckverbinder nach einem der Ansprüche 1 bis 6, **dadurch gekennzeichnet, daß** die Zungen (19 bis 24) in der Buchse (18) jeweils an der Stelle der Buchsenkontakte (3) angeordnet sind.

8. Steckverbinder nach einem der Ansprüche 1 bis 7, **dadurch gekennzeichnet, daß** die Zungen (19 bis 24) in der Buchse (18) jeweils in einer zu den mit einer Vorrichtung direkt verbundenen Buchsenkontakten (3) benachbarten Reihe angeordnet sind.

9. Steckverbinder nach einem der Ansprüche 7 oder 8, **dadurch gekennzeichnet, daß** die Zungen (19 bis 24) jeweils in der Buchse (18) angeordnete senkrecht stehende Kunststoffstege sind.

10. Steckverbinder nach einem der Ansprüche 1 bis 9, **dadurch gekennzeichnet, daß** die Buchse (18) in einer Reihe abwechselnd zwei Buchsenkontakte (3) und eine Zunge (19 bis 24) aufweist, die zwei Buchsenkontakte (3) ersetzt.

11. Steckverbinder nach Anspruch 10, **dadurch gekennzeichnet, daß** die Buchse (18) in einer zu den Zungen (19 bis 24) benachbarten Reihe die zu den direkt mit einer Vorrichtung elektrisch leitend verbundenen Steckerkontakten (8, 9, 13) passenden Buchsenkontakte (3) aufweist.

12. Steckverbinder nach einem der Ansprüche 1 bis 11, **dadurch gekennzeichnet, daß** die zu den Steckerkontakten (8, 9, 13) passenden Buchsenkontakte (3) direkt mit einer Endstufe zur Ansteuerung von Aktuatoren verbunden sind.

13. Steckverbinder nach einem der Ansprüche 1 bis 12, **dadurch gekennzeichnet, daß** im Stecker (14) Ausnehmungen (30 bis 35) vorgesehen sind, in die Zungen (19 bis 24) der Buchse (18) beim Zusammenstecken eingreifen.

14. Steckverbinder nach Anspruch 13, **dadurch gekennzeichnet, daß** jeder mechanische Kontakt (16, 17) zwei gegeneinander elastisch vorgespannte und leitende Elemente aufweist, zwischen die jeweils eine Zunge beim Zusammenstecken eingreift, wodurch der mechanische Kontakt (16, 17) unterbrochen ist.

15. Steckverbinder nach einem der Ansprüche 1 bis 14, **dadurch gekennzeichnet, daß** die Buchsenkontakte (3) Kontaktstifte sind.

16. Steckverbinder nach einem der Ansprüche 1 bis 15, **dadurch gekennzeichnet, daß** die Vorrichtungen Zündpillen für Airbags sind und die Buchsenkontakte (3) jeweils mit der entsprechenden Endstufe für Airbags elektrisch leitend verbunden sind.

## Claims

1. Plug-in connector having a plug (14), which has plug contacts (8, 9, 13) which are electrically conductively connected to an apparatus, and a socket (18) having socket contacts (3) which fit the plug contacts (8, 9, 13), a mechanical contact (16, 17) being arranged between the plug contacts (8, 9, 13 and 15), which are in each case associated with an apparatus, said mechanical contact (16, 17) being interrupted in the plugged-together state of the plug-in connector by a means and being short-circuited when the plug (14) is pulled away, **characterized in that** each means (19 to 24) simultaneously interrupts two or more mechanical contacts (16, 17), which are arranged between the plug contacts (8, 9, 13 and 15) of different apparatuses, when the plug-in connector is plugged together.

2. Plug-in connector according to Claim 1, **characterized in that** the means has at least one tongue (19 to 24) arranged in the socket (18).

3. Plug-in connector according to Claim 1 or 2, **characterized in that** in each case two plug contacts (8, 9, 13), which are connected to an apparatus, are arranged next to one another in a row in the plug (14).

4. Plug-in connector according to one of Claims 1 to 3, **characterized in that** a mechanical contact (16) and a further plug contact (15) are provided in or counter to the current flow direction between in each case two plug contacts (8, 9 or 13) which are electrically conductively connected to an apparatus.

5. Plug-in connector according to Claim 4, **characterized in that** the further plug contact (15) is arranged in a row adjacent to the two plug contacts (8, 9 or 13) which are directly connected to the apparatus.

6. Plug-in connector according to either of Claims 4 and 5, **characterized in that**, on the one hand, the mechanical contact (16 or 17) and, on the other hand, a permanently wired conductive connection (12) or short-circuiting link are provided in the plug (14) between the further plug contact (15) and the plug contacts (8, 9, 13) which are each directly connected to an apparatus.

7. Plug-in connector according to one of Claims 1 to 6, **characterized in that** the tongues (19 to 24) in the socket (18) are arranged in each case at the location of the socket contacts (3).

8. Plug-in connector according to one of Claims 1 to 7, **characterized in that** the tongues (19 to 24) in the socket (18) are arranged in each case in a row adjacent to the socket contacts (3) which are directly connected to an apparatus.

9. Plug-in connector according to either of Claims 7 and 8, **characterized in that** the tongues (19 to 24) are in each case perpendicular plastic webs arranged in the socket (18).

10. Plug-in connector according to one of Claims 1 to 9, **characterized in that** the socket (18) has, alternately in a row, two socket contacts (3) and a tongue (19 to 29), which replaces two socket contacts (3).

11. Plug-in connector according to Claim 10, **characterized in that** the socket (18) has, in a row adjacent to the tongues (19 to 24), the socket contacts (3) which fit the plug contacts (8, 9, 13) which are electrically conductively connected directly to an apparatus.

12. Plug-in connector according to one of Claims 1 to 11, **characterized in that** the socket contacts (3) which fit the plug contacts (8, 9, 13) are directly connected to an end stage for driving actuators.

13. Plug-in connector according to one of Claims 1 to 12, **characterized in that** cutouts (30 to 35) are provided in the plug (14), and tongues (19 to 24) of the socket (18) engage in said cutouts (30 to 35) when plugged together.

14. Plug-in connector according to Claim 13, **characterized in that** each mechanical contact (16, 17) has two conductive elements which are elastically prestressed with respect to one another and between which in each case one tongue engages when plugged together, as a result of which the mechanical contact (16, 17) is interrupted.

15. Plug-in connector according to one of Claims 1 to 14, **characterized in that** the socket contacts (3) are contact pins.

16. Plug-in connector according to one of Claims 1 to 15, **characterized in that** the apparatuses are igniters for airbags, and the socket contacts (3) are in each case electrically conductively connected to the corresponding end stage for airbags.

## Revendications

1. Connecteur comportant une fiche (14) présentant des contacts de fiche (8, 9, 13) reliés électriquement à un dispositif, et une prise (18) avec des contacts de prise (3) adaptés aux contacts de fiche (8, 9, 13), avec entre les contacts de fiche (8, 9, 13 et 15) associés chacun à un dispositif, un contact mécanique (16, 17), interrompu par un moyen à l'état enfiché du connecteur et court-circuité lorsque la fiche (14) est retirée,
**caractérisé en ce que**
chaque moyen (19 à 24) interrompt simultanément plusieurs contacts mécaniques (16, 17) disposés entre les contacts de fiche (8, 9, 13 et 15) de différents dispositifs lorsque la fiche est enfichée.

2. Connecteur selon la revendication 1,
**caractérisé en ce que**
le moyen présente au moins une languette (19 à 24) disposée dans la prise (18).

3. Connecteur selon la revendication 1 ou 2,
**caractérisé en ce que**
deux contacts de fiche (8, 9, 13) reliés à un dispositif sont chaque fois disposés dans la fiche (14) de manière adjacente dans une rangée.

4. Connecteur selon l'une quelconque des revendications 1 à 3,
**caractérisé en ce qu'**
un contact mécanique (16) et un autre contact de fiche (15) sont prévus dans le sens d'écoulement du courant ou dans le sens inverse entre respectivement deux contacts de fiche (8, 9 ou 13) reliés électriquement à un dispositif.

5. Connecteur selon la revendication 4,
**caractérisé en ce que**
l'autre contact (15) est disposé dans une rangée voisine des deux contacts de fiche (8, 9 ou 13) reliés directement au dispositif.

6. Connecteur selon l'une quelconque des revendications 4 ou 5,
**caractérisé en ce que**
d'une part le contact mécanique (16 ou 17) et d'autre part une liaison (12) conductrice ou un pont de court-circuit conducteur câblé fixe sont prévus entre l'autre contact (15) et les contacts de fiche (8, 9, 13) reliés chacun directement à un dispositif.

7. Connecteur selon l'une quelconque des revendications 1 à 6,
**caractérisé en ce que**
les languettes (19 à 24) sont respectivement disposées dans la prise (18) à la place des contacts de prise (3).

8. Connecteur selon l'une quelconque des revendications 1 à 7,
**caractérisé en ce que**
les languettes (19 à 24) sont disposées dans la prise (18) respectivement dans une rangée voisine des contacts de prise (3) reliés directement à un dispositif.

9. Connecteur selon l'une quelconque des revendications 7 ou 8,
**caractérisé en ce que**
les languettes (19 à 24) sont des nervures en plastique verticales dans la prise (18).

10. Connecteur selon l'une quelconque des revendications 1 à 9,
**caractérisé en ce que**
la prise (18) présente alternativement dans une même rangée deux contacts de prise (3) et une languette (19 à 24) qui remplace deux contacts de prise (3).

11. Connecteur selon la revendication 10,
**caractérisé en ce que**
dans une rangée voisine des languettes (19 à 24) la prise (18) présente les contacts (3) adaptés aux contacts de fiche (8, 9, 13) directement reliés électriquement à un dispositif.

12. Connecteur selon l'une quelconque des revendications 1 à 11,
**caractérisé en ce que**
les contacts de prise (3) adaptés aux contacts de fiche (8, 9, 13) sont directement reliés à un étage terminal pour exciter des actionneurs.

13. Connecteur selon l'une quelconque des revendications 1 à 12,
**caractérisé en ce que**
la fiche (14) comporte des évidements (30 à 35) dans lesquels s'engagent les languettes (19 à 24) de la prise (18) lors de l'enfichage.

14. Connecteur selon la revendication 13,
**caractérisé en ce que**
chaque contact mécanique (16, 17) présente deux éléments conducteurs précontraints élastiquement l'un contre l'autre et entre lesquels s'engage respectivement une languette lors de l'enfichage, ce qui interrompt le contact mécanique (16, 17).

15. Connecteur selon l'une quelconque des revendications 1 à 14,
**caractérisé en ce que**
les contacts de prise (3) sont des fiches de contact.

16. Connecteur selon l'une quelconque des revendications 1 à 15,
**caractérisé en ce que**
les dispositifs sont des amorces de coussins gonflables et les contacts de prise (3) sont électriquement reliés à l'étage final correspondant des coussins gonflables.
